# EUROPÄISCHE PATENTANMELDUNG

(11) **EP 1 249 995 A2**
(43) Veröffentlichungstag der Anmeldung: **16.10.2002**
(21) Anmeldenummer: 01118998.2
(22) Anmeldetag: 06.08.2001
(51) Int. Cl.: H04M 17/00, G07F 19/00

(54) **Optimiertes Wiederaufladen von Prepaid-Konten**

(30) Priorität: 12.04.2001 EP 01109181
(71) Anmelder: SIEMENS AKTIENGESELLSCHAFT, 80333 München (DE)
(72) Erfinder: Hausmann, Ruediger, Dr., 82377 Penzberg (DE); Horn, Michael, 81739 München (DE); Moritz, Peter, 85540 Haar (DE); Perthel, Frank, Dr., 82110 Germering (DE)

(57) **Zusammenfassung**

Verfahren zum Wiederaufladen eines vorausbezahlten elektronischen Guthabens eines Nutzers, insbesondere zur Bezahlung von Diensten in einem Daten- bzw. Telekommunikationssystem, mit folgenden Verfahrensschritten: a) Einstellen eines unteren Konto-Schwellwertes für das Guthaben; b) Signalisieren des Unterschreitens des Schwellwertes; und c) Auslösen einer Wiederaufladefunktion bei Unterschreiten des Schwellwertes.

## Beschreibung

Die Erfindung betrifft ein Verfahren nach dem Oberbegriff des Anspruches 1.

Verfahren zum Wiederaufladen eines vorausbezahlten elektronischen Guthabens eines Nutzers, insbesondere zur Bezahlung von Diensten in einem Daten- bzw. Telekommunikationssystem, sind aus dem Stand der Technik bekannt und werden üblicherweise als Einzahlungen mittels Kreditkarte, Überweisung, Scheck oder Barzahlung auf ein Konto eines Dienstleistungsbetreibers abgewickelt. Die Benutzung eines vorausbezahlten Dienstes geschieht dann im Regelfall so, daß z. B. das mobile Telefon eines Nutzers (Handy) zunächst über eine Callback-Zugangsnummer CLI-registriert wird (Caller Line Identification). Der Nutzer wird dann über einen Callback auf seinem Handy zurückgerufen. Er nimmt daraufhin das Gespräch an und wählt, wie gewohnt, die gewünschte Zielrufnummer oder nutzt z. B. eine der beim Dienstleister registrierten Kurzwahlen. Das nach dem Telefonat verbleibende Guthaben kann der Nutzer sich schließlich z. B. durch Drücken der #-Taste ansagen lassen.

Derartige vorausbezahlte Dienste (Prepaid Services) werden im wesentlichen für Privatkunden angeboten und bieten neben günstigen Verbindungspreisen innerdeutsch je nach Zielland auch große Ersparnisse für Auslandsgespräche. Vorteile dieser Dienste sind insbesondere in der sekundengenauen Abrechnung, auf Wunsch detaillierter Einzelgesprächsnachweise pro Quartal, einfacher Zugang über Rufnummernregistrierungen (CLI) und in der Einwahl über jedes beliebige Telefon mittels einer persönlichen Kontonummer und einer PIN zu finden.

Trotz der genannten Vorteile stehen Dienstleistungsunternehmen, welche vorausbezahlte Dienste anbieten, in diesem Marktsegment vor nicht unerheblichen Problemen. So wurde insbesondere in den letzten Jahren durch Zugrundelegung einer Mischkalkulation aus dem Verkaufserlös von Mobiltelefonen (Handys) zusammen mit einem vorausbezahlten Nutzungsguthaben versucht, breite Käuferschichten als Nutzer dieser Dienste zu gewinnen. Gerade in jungen Käuferschichten fanden Angebote von Mobiltelefonen fast zum Nulltarif zusammen mit vorausbezahlten Diensten (Prepaid-Karten) hohe Akzeptanz.

In letzter Zeit setzt sich aber mehr und mehr die Erkenntnis durch, daß aufgrund der durchschnittlich sehr niedrigen vorausbezahlten Guthaben die kalkulatorische Grundlage zum gewinnbringenden oder wenigstens kurzfristig kostendeckenden Betrieb eines solchen Angebotes in Frage steht. Es wird deshalb mittlerweile erwogen, die Verkaufspreise von Mobiltelefonen wieder so zu gestalten, daß zumindest ein Teil der Gerätekosten dadurch gedeckt wird. Auf der anderen Seite soll gleichzeitig die Akzeptanz vorausbezahlter Dienste durch die nutzerseitig verbesserte Bedienbarkeit, insbesondere das vereinfachte Wiederaufladen eines elektronischen Guthabens deutlich verbessert werden. Dadurch ist zu erwarten, daß den Dienstleistern ein insgesamt höheres Guthabenpotential zur Verfügung steht, um zukünftig wettbewerbsfähige Dienstleistungsportfolios anzubieten.

Es ist Aufgabe der vorliegenden Erfindung, ein Verfahren zum Wiederaufladen eines vorausbezahlten elektronischen Guthabens anzugeben, welches einfach und selbsterklärend vom Nutzer selbst auf seine spezifischen Bedürfnisse anpaßbar ist.

Diese Aufgabe wird durch ein Verfahren mit den folgenden Verfahrensschritten gelöst (a) Einstellen eines unteren Kontoschwellwertes für das Guthaben; (b) Signalisieren des Unterschreitens des Schwellwertes; und (c) Auslösen einer Wiederaufladefunktion bei Unterschreiten des Schwellwertes.

Ein wesentlicher Gedanke des erfindungsgemäßen Verfahrens besteht darin, zunächst einen Automatismus anzubieten, welcher z. B. beim Vertragsabschluß über die Buchung der Dienste einstellbar ist und den Nutzer von der Entscheidung zum Wiederaufladen seines elektronischen Guthabens befreit. Dabei kann der untere Kontoschwellwert oder auch eine Staffelung einer Anzahl von Kontoschwellwerten so eingestellt werden, daß auch eine differenzierte und abhängig von den Nutzungsbedingungen durchgeführte Wiederaufladung des Guthabenkontos möglich ist.

Vorteilhafte Weiterbildungen des erfindungsgemäßen Verfahrens sind in den Unteransprüchen 2 bis 20 angegeben.

Bevorzugt wird das Verfahren so durchgeführt, daß nach dem Verfahrensschritt (c) die weiteren Schritte (d) Senden eines Signals an den Nutzer und (e) Auslösen der Wiederaufladung durch den Nutzer durchgeführt werden.

Ein besonderer Vorteil dieser Verfahrensführung besteht darin, daß der Nutzer nunmehr aktiv in den Wiederaufladeprozeß eingebunden ist und dadurch selbst die Möglichkeit erhält, leicht eine Aufstockung seines elektronischen Guthabens nach seinen Wünschen durchzuführen. Damit wird dem Nutzer grundsätzlich auch das Einstellen eines unteren Kontoschwellwertes für das Guthaben zugänglich. Die hinter dieser neuartigen Verfahrensführung stehende Systematik beruht dabei auf der Umkehrung der Aktionsfolge Function-Calls-User in die Aktionsfolge User-Calls-Function. Mit dieser Umkehrung stehen dem Nutzer aber gleichzeitig weitgehende Eingriffsmöglichkeiten in die Art und den Umfang der Wiederaufladung seines elektronischen Guthabens zur Verfügung.

In bevorzugter Weise wird die Wiederaufladefunktion in Ansprechen auf das Unterschreiten des Schwellwertes aktiv und ist dem aktuell vom Nutzer genutzten Dienst überlagert. Dadurch bietet sich dem Nutzer beim Führen eines Telefonates die Möglichkeit, rechtzeitig sein elektronisches Guthaben soweit zu erhöhen, daß ihm ein unfreiwilliger Abbruch des Gespräches und möglicherweise eine Sperrung des Anschlusses durch zu geringen Guthabenvorhalt erspart bleibt.

Alternativ ist es möglich, daß die Aufladefunktion in Ansprechen auf das Unterschreiten des Schwellwertes in einen Wartezustand versetzt wird, bis der aktuell vom Nutzer genutzte Dienst beendet wird. Eine solche Funktionalität hat den Vorteil, daß z. B. ein aktuelles Telefonat nicht gestört wird, trotzdem der Nutzer nach Beendigung einen Hinweis darauf erhält, daß ein Minimalguthaben erreicht ist und sein Guthaben einer Aufladung bedarf.

In bevorzugter Weise kann die Wiederaufladefunktion auch wiederkehrend automatisch aktiv sein. Ist für einen Nutzer z. B. bei einem vorausbezahlten Guthaben von DM 100,00 ein relativ hoher Schwellwert von DM 20,00 eingestellt, würde ein Unterschreiten dieses Schwellwertes nicht notwendigerweise die Gefahr der Sperrung des Anschlusses mit sich bringen. Der Nutzer könnte sich also mit der Wiederaufladung seines Kontos Zeit lassen, da die wiederkehrend automatisch aktive Wiederaufladefunktion ihn in regelmäßigen oder auch sich verkürzenden Abständen an das notwendig werdende Aufstocken seines elektronischen Guthabens erinnert.

Bleibt die Wiederaufladefunktion aktiv, auch wenn diese vom Nutzer durch Auslösen eines Abbruch- oder Ignorierungssignals zunächst abgebrochen oder zeitweise nicht beachtet werden sollte, ist sichergestellt, daß vor der Sperrung des Anschlusses dem Nutzer ausreichend Gelegenheit gegeben wurde, sein vorausbezahltes Guthaben den von ihm in Anspruch genommenen Diensten anzupassen.

In einer vorteilhaften Ausgestaltungsform ist das Wiederaufladen mittels des erfindungsgemäßen Verfahrens nicht innerhalb eines kurzen Zeitraums mehrfach möglich. Es wird dann nur ein Aufladevorgang innerhalb eines bestimmten Zeitraumes (beispielsweise ein Tag) unterstützt. Im Falle eines Diebstahls oder sonstigen Abhandenkommens des Handys hat der Eigentümer ausreichend Zeit, sein Konto oder das Handy sperren zu lassen, bevor ein größerer finanzieller Schaden eintritt.

Eine besonders einfache Wiederaufladung des elektronischen Guthabens kann dadurch erreicht werden, daß die Wiederaufladefunktion das Guthaben um einen festen Betrag erhöht. Das Aufladen um einen festen Betrag kann dabei nutzerseitig wie auch systemseitig ausgelöst werden. Hat z. B. ein Nutzer mit dem Anbieter der Dienste eine Aufladung seines Guthabens um DM 20,00 jeweils bei Erreichen eines unteren Schwellwertes vertraglich vereinbart, kann er durch einfache Bestätigung der Wiederaufladefunktion (Aufladen? - ja/nein) eine Aufstockung seines elektronischen Guthabens herbeiführen.

Eine flexiblere Gestaltung der Wiederaufladung kann dadurch erreicht werden, daß die Wiederaufladefunktion das Guthaben um einen vom Nutzer einstellbaren Betrag erhöht. Dies kann insofern von Vorteil sein, als ein Nutzer bei erstmaliger Inanspruchnahme der gebuchten Dienste einen Wiederaufladebetrag gewählt haben kann, welcher seiner tatsächlichen Nutzung des Angebotes nicht entspricht. Führt er z. B. vermehrt Auslandsgespräche und nutzt gleichzeitig in steigendem Umfang Voice-Mail-Funktionen (Anrufbeantworterfunktion) und SMS (Short Message Services), könnte eine Erhöhung des Wiederaufladebetrages notwendig sein.

Dies kann natürlich grundsätzlich einhergehen mit der nachträglichen Änderung des unteren Kontoschwellwertes, bei welchem der Nutzer eine Benachrichtung erfährt. Dieser könnte bei Nutzung niederwertiger Dienste, wie z. B. Telefonieren zum Ortstarif, bei DM 5,00, bei umfassender Nutzung eines größeren Angebotes, wie z. B. Internetzugang, E-Mail, SMS und Voice-Mail, aber wesentlich höher liegen.

Eine besonders einfache und flexible Handhabung der Wiederaufladefunktion wird dadurch erreicht, daß diese vom Nutzer durch Bestätigung eines vorgegebenen Zahlungsbetrages und/oder vorgegebener Zahlungsbedingungen gesteuert wird. Ein derart vorgegebener Zahlungsbetrag kann z. B. aus einem durch die Wiederaufladefunktion angebotenen Menü mit einer Anzahl verschiedener Aufladebeträge auswählbar sein. Der Nutzer wird dann einen der angebotenen Zahlungsbeträge z. B. menügeführt - per Display oder Sprachführung - auswählen und einstellen. Auch die Zahlungsbedingungen könnten in gleicher Weise vorgegeben sein, wobei der Nutzer z. B. zwischen Lastschriftverfahren auf ein oder auf ein anderes Konto, alternativ auch auf Barzahlung einer Prepaid-Karte umstellen kann.

Die Auswahl und Einstellung des Zahlungsbetrages und der jeweiligen Zahlungsbedingungen einzeln oder in Kombination bieten dem Nutzer eine nicht unerhebliche Flexibilität in der Handhabung des Wiederaufladens seines elektronischen Guthabens zur Bezahlung der in Anspruch genommenen Dienste.

In bevorzugter Weise ist die Wiederaufladefunktion vom Nutzer durch Eingabe von Zahlungsbetrag und/oder Zahlungsbedingungen modifizierbar. So kann sowohl der Zahlungsbetrag als auch die Zahlungsbedingungen für zukünftige Abbuchungen z. B. von einem Girokonto fest eingestellt werden. Danach würde der Nutzer bei Unterschreiten eines Kontoschwellwertes und einem darauffolgenden Hinweis zum Aufladen lediglich den einmal eingestellten Betrag und/oder die Zahlungsbedingungen bestätigen. Möglich ist natürlich auch die einmalige Einstellung der Zahlungsbedingungen bei jeweils neu angepaßtem Zahlungsbetrag bei Unterschreiten des unteren Kontoschwellwertes. Es ist dabei auch möglich, abhängig vom eingestellten Zahlungsbetrag automatisch den unteren Kontoschwellwert mittels der Wiederaufladefunktion dahingehend zu ändern, daß dieser z. B. bei Wiederaufladebeträgen größer als DM 50,00 bei DM 20,00 liegt, bei Wiederaufladebeträgen unterhalb DM 50,00 aber bei DM 5,00.

Eine vorteilhafte Weiterbildung des erfindungsgemäßen Verfahrens liegt desweiteren darin, daß die Wiederaufladefunktion mittels Sprachmenü- und DTMF(Dual Ton Multiple Frequency)-Eingabe über eine Tastatur bedient wird. Eine derartige Benutzerführung ist insbesondere dann sinnvoll, wenn der Nutzer eine regelmäßige Anpassung der Wiederaufladung an seine tatsächlichen Bedürfnisse wünscht. Eine problemlose Bedienung der Wiederaufladefunktion z. B. für den Fahrer eines Fahrzeuges wird dadurch sichergestellt, daß auch eine Bedienung der Wiederaufladefunktion mittels Spracherkennung möglich ist.

Relativ einfach ist auch die Steuerung der Wiederaufladefunktion durch Eingabe einer SMS-Nachricht über eine Tastatur. Dies kann insbesondere dort von Vorteil sein, wo sich der Nutzer in Umgebungen befindet, wo eine Sprachführung unvorteilhaft wäre. Dies ist z. B. in voll besetzten Reisezügen oder entsprechenden Großraumbüros der Fall.

In diesem Sinne ist auch von Vorteil, wenn die Wiederaufladefunktion auf Basis eines IT-Protokolls über ein WAP-Handy und/oder einen Internet-Rechner gesteuert wird. Eine bildgesteuerte Wiederaufladefunktion ist für einen Nutzer üblicherweise intuitiv bedienbar und selbsterklärend. Eine für den Nutzer zugängliche Internetpage des Dienstleistungsanbieters kann dabei die gleichen wie im Vorhinein beschriebenen Funktionalitäten und Möglichkeiten umfassen.

Ein wichtiges Thema ist die Authorisierung der Zahlungen, insbesondere, wenn die Wiederaufladefunktion über das Internet gesteuert wird. Der Austausch von Daten sollte durch ein kryptographisches Verfahren abgesichert werden, insbesondere bei der Übertragung im Internet. Geeignete Programme wie SSL (Secure Socket Layer) oder PKI (Public key infrastructure) sind dem Fachmann bekannt, auf eine weitergehende Erläuterung ihrer Anwendung wird daher im folgenden verzichtet. Vorteilhaft ist es, wenn das Referenzkonto dem selben Kunden gehört, wie das aufzuladende Prepaid Konto. In diesem Fall würde selbst im Falle eines Diebstahls oder sonstigen Abhandenkommens des Handys dem Kunden kein finanzieller Schaden entstehen, da immer sichergestellt wäre, daß jeweils das Prepaid-Konto vom eigenen Referenzkonto aufgeladen wird.

Eine noch weitergehende Sicherung wird erreicht, nach der Zeitraum, in dem ein wiederholter Aufladevorgang stattfinden kann, begrenzt wird. Das bedeutet, das Verfahren wird so gestaltet, daß der Aufladevorgang nach einer Durchführung erst wieder nach Ablauf eines zuvor definierten Zeitraums (beispielsweise einem Tag) wieder gestattet oder unterstützt wird. Dieses hätte den Vorteil, daß der rechtmäßige Eigentümer des Endgerätes einen ausreichenden Zeitraum zur Verfügung hat, um sein Konto bzw. sein Handy zu sperren.

Im folgenden wird das erfindungsgemäße Verfahren anhand einer Figur näher erläutert. Diese Figur zeigt ein Funktionsdiagramm zur Verdeutlichung des prinzipiellen Ablaufes eines Aufladeverfahrens für elektronische Guthaben zur Bezahlung von Prepaiddiensten.

Zu erkennen ist insbesondere eine Dienststeuerung, welche in Form einer ablauffähigen Software ausgebildet ist und eine Dienstablaufumgebung umfaßt, welche die Dienste Wiederaufladen (Recharge) und Vorauszahlen (Prepaid) beinhaltet. Der Prepaiddienst überwacht dabei das in einer Datenbank abgelegte Profil (vorausbezahltes Guthaben, gebuchter Dienstumfang) und den Kontostand eines Teilnehmers A, welcher die Prepaiddienste nutzt. Die Dienststeuerung sorgt dabei für das reibungslose Zusammenspiel zwischen Dienstablaufumgebung und Datenbank.

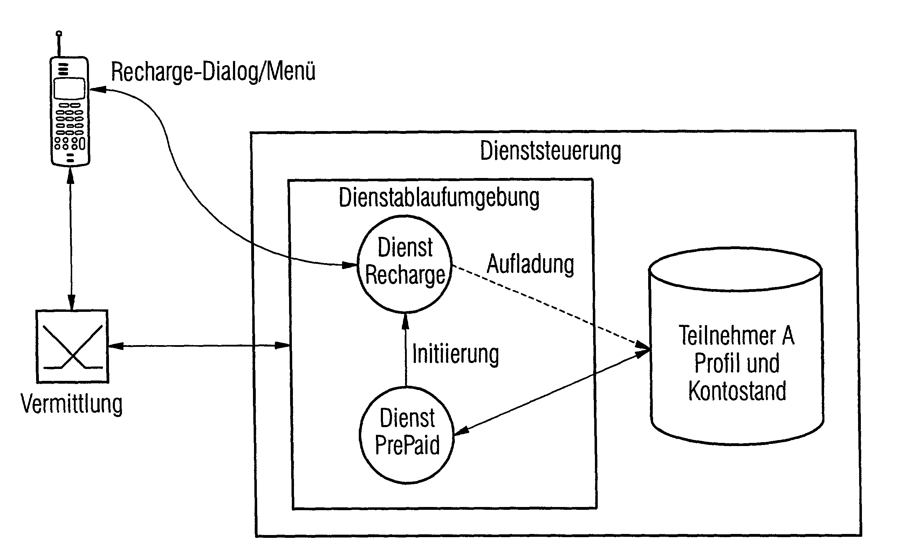

Sinkt z. B. das aktuelle Guthaben des Teilnehmers A unter einen unteren Schwellwert, wird vom Prepaiddienst ein Recharge-Dienst initiiert. Dieser sieht in der Regel vor, daß der Recharge-Dienst in der Dienstablaufumgebung gestartet wird. Die Dienststeuerung übernimmt dabei den Teil der Koordination mehrerer Dienstablaufumgebungen gegeneinander und gegenüber der Datenbank. Der Recharge-Dienst löst bei dem Teilnehmer A auf einem von ihm genutzten Mobiltelefon, welches links oben in der Figur zu erkennen ist, einen Recharge-Dialog oder ein Recharge-Menü auf dem Display des Mobiltelefons aus. Der Teilnehmer A kann dann z. B. einen Wiederaufladebetrag aus einer Anzahl von vorgegebenen Beträgen auswählen und bestätigen. Bei dieser Gelegenheit kann er möglicherweise optional diesen vorgegebenen und ausgewählten Betrag für ein zukünftiges Unterschreiten des Schwellwertes einstellen und gleichzeitig seine Zahlungsbedingungen angeben.

Mit dem Abschluß des Nutzerdialoges des Recharge-Dienstes findet eine Übermittlung der eingegebenen Daten an eine Vermittlungsstelle statt. Diese speist die Daten des Nutzers zur Wiederaufladung in die Dienstablaufumgebung ein. Der Recharge-Dienst sorgt schließlich für die Erhöhung des elektronischen Guthabenstandes und sorgt für die Initiierung z. B. einer entsprechenden Abbuchung von einem angegebenen Girokonto. Wird von dem Nutzer im Recharge-Dialog bzw. -Menü auch eine Änderung des unteren Kontoschwellwerts eingegeben, wird auch diese von dem Recharge-Dienst in der Datenbank unter dem Teilnehmer A in seinem Profil hinterlegt. Der Prepaiddienst erkennt bei sinkendem Guthaben infolge der Nutzung von Dienstleistungen des Teilnehmers A den neu definierten unteren Kontoschwellwert und initiiert wiederum bei dessen Unterschreitung den Recharge-Dienst. Dem Teilnehmer A steht damit die maximale Flexibilität des Verfahrens zum Wiederaufladen eines vorausbezahlten elektronischen Guthabens zur Verfügung.

Wirtschaftlich bedeutsame Anwendungen der Erfindung sind zukünftig insbesondere auch beim Zugriff auf Internet-Datenbasen aufgrund des GPRS- oder UMTS-Mobilfunkstandards aufgrund eines vorausbezahlten Guthabens zu sehen. Diese modernen Mobilfunksysteme ermöglichen bekanntlich die Übertragung großer Datenmengen mit akzeptabler Geschwindigkeit und bieten daher ein großes Potential für Prepaid-Anwendungen mit nutzerfreundlichen Konditionen, wie sie mit der Erfindung verwirklicht werden. Eine weitere, wirtschaftlich wichtige Anwendung liegt bei künftigen Video-on-Demand-Systemen, d. h. bei der Lieferung von Filmen, Videoclips oder anderen Bewegtbild-Files an den Inhaber eines Prepaid-Guthabens, oder auch bei der analogen Lieferung von Musik- oder anderen Audiodateien auf gleicher Grundlage.

An dieser Stelle sei darauf hingewiesen, daß alle oben beschriebenen Verfahrensschritte für sich alleine gesehen und in jeder Kombination, insbesondere die in der Figur dargestellten Details, als erfindungswesentlich beansprucht werden. Abänderungen hiervon sind dem Fachmann geläufig.

## Patentansprüche

1. Verfahren zum Wiederaufladen eines vorausbezahlten elektronischen Guthabens eines Nutzers, insbesondere zur Bezahlung von Diensten in einem Daten- bzw. Telekommunikationssystem, mit folgenden Verfahrensschritten:
a) Einstellen eines unteren Konto-Schwellwertes für das Guthaben;
b) Signalisieren des Unterschreitens des Schwellwertes; und
c) Auslösen einer Wiederaufladefunktion bei Unterschreiten des Schwellwertes.

2. Verfahren nach Anspruch 1,
**dadurch gekennzeichnet, daß**
die Schritte b) und c) die Teilschritte
b1) Senden eines Signals an den Nutzer; und
c1) Bestätigen der Wiederaufladung durch den Nutzer umfassen.

3. Verfahren nach Anspruch 2,
**dadurch gekennzeichnet, daß**
nach dem Schritt b1) die Teilschritte
b11) Empfangen des Signals durch den Nutzers;
b12) Auslösen der Wiederaufladefunktion durch den Nutzer und
b13) Bearbeiten der Wiederaufladung durch den Nutzers durchgeführt werden.

4. Verfahren nach Anspruch 1,
**dadurch gekennzeichnet, daß**
die Wiederaufladefunktion in Ansprechen auf das Unterschreiten des Schwellwertes aktiv und dem aktuell vom Nutzer genutzten Dienst überlagert ist.

5. Verfahren nach Anspruch 1,
**dadurch gekennzeichnet, daß**
die Wiederaufladefunktion in Ansprechen auf das Unterschreiten des Schwellwertes in einen Wartezustand versetzt wird, bis der aktuell vom Nutzer genutzte Dienst beendet wird.

6. Verfahren nach einem der Ansprüche 1 bis 5,
**dadurch gekennzeichnet, daß**
die Wiederaufladefunktion wiederkehrend automatisch aktiv ist.

7. Verfahren nach einem der Ansprüche 1 bis 5,
**dadurch gekennzeichnet, daß**
die Wiederaufladefunktion erst nach einer definierten Zeitspanne wieder aktiv ist.

8. Verfahren nach einem der Ansprüche 1 bis 5,
**dadurch gekennzeichnet, daß**
die Wiederaufladefunktion aktiv bleibt, auch wenn diese vom Nutzer durch Auslösen eines Abbruch- oder Ignorierungssignals zunächst abgebrochen oder zeitweise nicht beachtet werden sollte.

9. Verfahren nach einem der Ansprüche 1 bis 8,
**dadurch gekennzeichnet, daß**
die Wiederaufladefunktion das Guthaben um einen festen Betrag erhöht.

10. Verfahren nach einem der Ansprüche 1 bis 8, **gekennzeichnet durch**
die Wiederaufladefunktion das Guthaben um einen vom Nutzer einstellbaren Betrag erhöht.

11. Verfahren nach einem der vorhergehenden Ansprüche,
**dadurch gekennzeichnet, daß**
die Wiederaufladefunktion vom Nutzer durch Bestätigung eines vorgegebenen Zahlungsbetrages und/oder vorgegebener Zahlungsbedingungen ausgelöst wird.

12. Verfahren nach einem der vorhergehenden Ansprüche,
**dadurch gekennzeichnet, daß**
die Wiederaufladefunktion vom Nutzer durch Eingabe von Zahlungsbetrag und/oder Zahlungsbedingungen modifizierbar ist.

13. Verfahren nach einem der vorhergehenden Ansprüche, **dadurch gekennzeichnet, daß**
die Wiederaufladefunktion mittels Sprach-Menü und DTMF-Eingabe über eine Tastatur bearbeitet wird.

14. Verfahren nach einem der vorhergehenden Ansprüche,
**dadurch gekennzeichnet, daß**
die Wiederaufladefunktion durch Eingabe einer SMS-Nachricht über eine Tastatur bearbeitet wird.

15. Verfahren nach einem der vorhergehenden Ansprüche,
**dadurch gekennzeichnet, daß**
die Wiederaufladefunktion auf Basis eines IP-Protokolls über ein WAP-Handy und/oder einen Internet-Rechner/WAP-Server gesteuert wird.

16. Verfahren nach einem der vorhergehenden Ansprüche,
**dadurch gekennzeichnet, daß**
der Austausch von Signalen und/oder Daten durch ein kryptographisches Verfahren abgesichert ist.

17. Verfahren nach einem der vorhergehenden Ansprüche,
**dadurch gekennzeichnet, daß**
die Wiederaufladefunktion vom Nutzer nur in einem zeitlichen Abstand von der letzten Wiederaufladung des Kontos durchgeführt werden kann

18. Verfahren nach einem der vorhergehenden Ansprüche,
**dadurch gekennzeichnet, daß**
die Wiederaufladefunktion auf ein Referenzkonto des Nutzers zugreift.

19. Verfahren nach einem der vorhergehenden Ansprüche, **gekennzeichnet durch**
die Anwendung zur Vergebührung eines Dienstes, insbesondere Datenbereitstellungsdienstes, in einem GPRS- oder UMTS-Mobilfunksystem aufgrund eines vorausbezahlten Guthabens.

20. Verfahren nach einem der Ansprüche 1 bis 18, **gekennzeichnet durch**
die Anwendung zur Vergebührung der Bereitstellung von Video- und/oder Musik- und/oder Sprachfiles in einem Video-on-Demand-Systems oder Audio-on-Demand-System aufgrund eines vorausbezahlten Guthabens.
